# EUROPEAN PATENT APPLICATION

(11) **EP 4 236 000 A1**
(43) Date of publication of application: **30.08.2023**
(21) Application number: 23157606.7
(22) Date of filing: 20.02.2023
(51) Int. Cl.: H02J 3/32, H02J 7/00, H02J 13/00

(54) **CONTROL DEVICE AND CONTROL METHOD FOR POWER SWAP STATION**

(30) Priority: 28.02.2022 CN 202210185106
(71) Applicant: Nio Technology (Anhui) Co., Ltd, Hefei City, Anhui 230601 (CN)
(72) Inventor: Chen, Shuyan, Hefei, Anhui, 230601 (CN)
(74) Representative: Vossius & Partner Patentanwälte Rechtsanwälte mbB

(57) **Abstract**

The disclosure relates to a control device, a control method, and a charging and discharging apparatus for a power swap station, a power swap station, and a computer-readable storage medium. The control device includes: a receiving module, configured to receive first information and second information for indication, where the first information indicates a status of a power swap station, and the second information indicates a working requirement on the power swap station; and a control module, configured to: send a first control signal in response to that the first information indicates that the power swap station is in an on-grid state and the second information indicates a charging requirement on at least one battery pack in the power swap station, where the first control signal instructs to perform an on-grid charging operation on the power swap station, to charge the at least one battery pack, and send a second control signal in response to that the first information indicates that the power swap station is in an off-grid state and the second information indicates a power swap requirement on the power swap station, where the second control signal instructs to perform off-grid discharging operation on the power swap station, so that the power swap station can complete the power swap requirement.

## Description

### Technical Field

The disclosure relates to the field of power swap stations, and specifically, to a control device, a control method, and a charging and discharging apparatus for a power swap station, a power swap station, and a computer-readable storage medium.

### Background Art

As an energy supply method for new energy vehicles, the power swap station can effectively shorten the energy supply time and alleviate car owners' concerns about a battery swap time when traveling.

Due to the shortage of power in the country, grids in many places have implemented management measures for orderly power consumption, and strengthen power consumption management, change the way users use electricity, and take measures such as peak shifting, peak avoidance, power rationing, and power cutoff, to deal with contradiction between power supply and demand. As a result, on the one hand, the power supply of the power swap station may be switched off at any time to limit power, resulting in a sudden power failure of the entire power swap station, making it impossible to provide power swap services normally. On the other hand, it can also be considered that a battery pack in the power swap station is used to reversely supply power to a grid, so as to help alleviate the contradiction between power supply and demand.

The information disclosed above in the background art of the disclosure is merely intended to facilitate understanding of the general background of the disclosure and should not be taken as an acknowledgement or any form of suggestion that the information constitutes the prior art already known to those of ordinary skill in the art.

### Summary of the Disclosure

According to one aspect of the disclosure, a control device for a power swap station is provided, including: a receiving module, configured to receive first information and second information for indication, where the first information indicates a status of the power swap station, and the second information indicates a working requirement on the power swap station; and a control module, configured to: send a first control signal in response to that the first information indicates that the power swap station is in an on-grid state and the second information indicates a charging requirement on at least one battery pack in the power swap station, where the first control signal instructs to perform an on-grid charging operation on the power swap station, to charge the at least one battery pack, and send a second control signal in response to that the first information indicates that the power swap station is in an off-grid state and the second information indicates a power swap requirement on the power swap station, where the second control signal instructs to perform off-grid discharging operation on the power swap station, so that the power swap station can complete the power swap requirement.

As an alternative or a supplement to the above solution, in the control device according to an embodiment of the disclosure, the control module is further configured to send the second control signal in response to that the first information indicates that the power swap station is in the off-grid state and the second information indicates that the power swap station is performing a power swap operation.

As an alternative or a supplement to the above solution, in the control device according to an embodiment of the disclosure, the control module is further configured to send a third control signal in response to that the first information indicates that the power swap station is in the on-grid state and the second information indicates a power supply requirement on a grid, where the third control signal instructs to perform an on-grid discharging operation on the power swap station, to reversely supply power to the grid.

As an alternative or a supplement to the above solution, in the control device according to an embodiment of the disclosure, the control device is powered by an uninterruptible power supply UPS.

As an alternative or a supplement to the above solution, in the control device according to an embodiment of the disclosure, the receiving module is further configured to receive third information, where the third information indicates a progress of the power swap operation in the power swap station. The control module is further configured to send a fourth control signal in response to that the third information indicates that the power swap operation has completed, where the fourth control signal instructs to perform charging and discharging health check on a newly replaced battery pack.

According to another aspect of the disclosure, a charging and discharging apparatus for a power swap station is provided. The charging and discharging apparatus is connected to at least one battery pack, a grid, and station usage power of the power swap station, and the charging and discharging apparatus includes: the foregoing control device; and a power conversion device, configured to: convert alternating current power from the grid to direct current power in response to receiving of the first control signal, to charge the at least one battery pack; and convert direct current power from the at least one battery pack to alternating current power in response to receiving of the second control signal, to supply power to the power swap operation of the power swap station.

As an alternative or a supplement to the above solution, in the charging and discharging apparatus according to an embodiment of the disclosure, the power conversion device is further configured to: convert direct current power from the at least one battery pack to alternating current power in response to receiving of the third control signal, to reversely supply power to the grid.

As an alternative or a supplement to the above solution, in the charging and discharging apparatus according to an embodiment of the disclosure, the charging and discharging apparatus further includes: an N-channel switch, configured to be switched off in response to the first control signal or the third control signal and be switched on in response to the second control signal.

As an alternative or a supplement to the above solution, in the charging and discharging apparatus according to an embodiment of the disclosure, communication between the control device and the power conversion device is performed through a controller area network CAN.

According to another aspect of the disclosure, a power swap station is provided, including: at least one of the foregoing charging and discharging apparatus; and at least one battery pack. Each of the at least one battery pack is connected to one of the at least one charging and discharging apparatus.

According to yet another aspect of the disclosure, a control method for a power swap station is provided, including: receiving first information and second information for indication, where the first information indicates a status of the power swap station, and the second information indicates a working requirement on the power swap station; and sending a first control signal in response to that the first information indicates that the power swap station is in an on-grid state and the second information indicates a charging requirement on at least one battery pack in the power swap station, where the first control signal instructs to perform an on-grid charging operation on the power swap station, to charge the at least one battery pack, and sending a second control signal in response to that the first information indicates that the power swap station is in an off-grid state and the second information indicates a power swap requirement on the power swap station, where the second control signal instructs to perform off-grid discharging operation on the power swap station, so that the power swap station can complete the power swap requirement.

As an alternative or a supplement to the above solution, the control method according to an embodiment of the disclosure further includes: sending the second control signal in response to that the first information indicates that the power swap station is in the off grid state and the second information indicates that the power swap station is performing a power swap operation.

As an alternative or a supplement to the above solution, the control method according to an embodiment of the disclosure further includes: sending a third control signal in response to that the first information indicates that the power swap station is in the on-grid state and the second information indicates a power supply requirement on a grid, where the third control signal instructs to perform an on-grid discharging operation on the power swap station, to reversely supply power to the grid.

As an alternative or a supplement to the above solution, the control method according to an embodiment of the disclosure further includes: receiving third information, where the third information indicates a progress of the power swap operation in the power swap station; and sending a fourth control signal in response to that the third information indicates that the power swap operation has completed, where the fourth control signal instructs to perform charging and discharging health check on a newly replaced battery pack.

According to yet another aspect of the disclosure, a computer-readable storage medium having a computer program stored thereon is provided. When the computer program is executed by a processor, the foregoing control method is implemented.

### Brief Description of the Drawings

The above and other objectives and advantages of the disclosure will be clearer and more thorough from the following detailed description in conjunction with the drawings.
FIG. 1 is a structural block diagram of a control device 100 for a power swap station according to an embodiment of the disclosure;
FIG. 2 is a structural block diagram of a power swap station 200 according to an embodiment of the disclosure; and
FIG. 3 is a flowchart of a control method 300 for a power swap station according to an embodiment of the disclosure.

### Detailed Description of Embodiments

The disclosure will be more completely described with reference to the accompanying drawings. Exemplary embodiments of the disclosure are shown in the accompanying drawings. However, the disclosure may be implemented in many different forms and should not be construed as being limited to the embodiments set forth herein. On the contrary, these embodiments are provided to make the disclosure thorough and complete and fully pass on the concept of the disclosure to those skilled in the art.

The terms such as "first" and "second" in the context of the disclosure are intended to distinguish between similar objects, and do not necessarily describe a sequence of objects in terms of time, space, size, and the like. In addition, unless otherwise specified, the terms "including/comprising", "having", and similar expressions herein are intended to mean a non-exclusive inclusion.

In the context of the disclosure, the term "vehicle" or other similar terms is intended to mean a pure electric vehicle or a hybrid vehicle powered at least in part by a power battery. The hybrid vehicle is a vehicle with two or more power sources, such as a vehicle powered by a gasoline engine and an electric motor.

In the context of the disclosure, the term "power swap station" refers to a place that can provide battery swapping services for pure electric vehicles or hybrid electric vehicles.

Various exemplary embodiments according to the disclosure will be described below in detail with reference to the accompanying drawings.

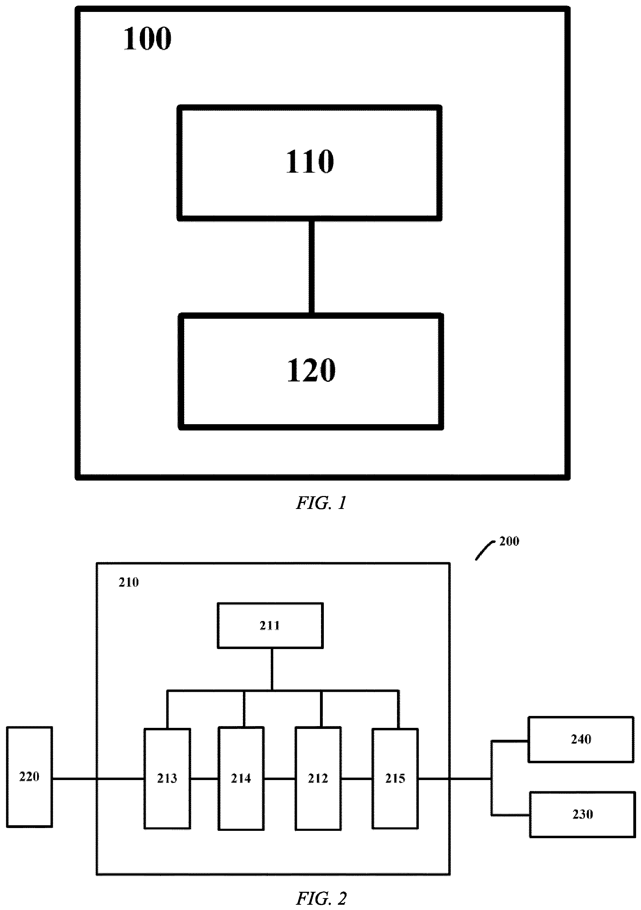

FIG. 1 is a structural block diagram of a control device 100 for a power swap station according to an embodiment of the disclosure. In FIG. 1, the control device 100 includes a receiving module 110 and a control module 120.

The receiving module 110 is configured to receive first information and second information for indication. The first information indicates a status of the power swap station, and the second information indicates a working requirement on the power swap station.

In the context of the disclosure, "a state of a power swap station" is meant to indicate a state of connection between the power swap station and a grid, for example, including an on-grid state (that is, the power swap station is connected to the grid) and an off-grid state (that is, the power swap station is disconnected from the grid).

In the context of the disclosure, "a working requirement of a power swap station" is a working requirement of an upper-level control device or the outside on the power swap station, for example, including a requirement for charging a battery pack in the station by the power swap station, a requirement for providing station usage power by the battery pack in the station to maintain a power swap operation, and a requirement for reversely supplying power to the grid by the battery pack in the station, etc.

The control module 120 is configured to send a first control signal in response to that the first information indicates that the power swap station is in an on-grid state and the second information indicates a charging requirement on at least one battery pack in the power swap station. The first control signal instructs to perform an on-grid charging operation on the power swap station, to charge the at least one battery pack.

The second information indicating the charging requirement may come from, for example, an instruction of an upper-level control device, may come from a user input, or may come from that the power swap station recognizes that the station has a battery pack with unsaturated power. This is not limited in the disclosure.

The control module 120 is further configured to send a second control signal in response to that the first information indicates that the power swap station is in an off-grid state and the second information indicates a power swap requirement on the power swap station. The second control signal instructs to perform off-grid discharging operation on the power swap station, to provide station usage power to the power swap station, so that the power swap station can complete the power swap requirement.

The second information indicating the power swap requirement may come from, for example, an instruction of an upper-level control device, or may come from a user input. This is not limited in the disclosure.

In an embodiment, the control module 120 may be further configured to send the second control signal in response to that the first information indicates that the power swap station is in the off grid state and the second information indicates that the power swap station is performing a power swap operation. As mentioned above, the second control signal instructs to perform off-grid discharging operation on the power swap station, so that the power swap station can complete the power swap requirement. Therefore, if the power supply on the grid side is interrupted during the power swap process, the battery pack in the power swap station can still be used to provide station usage power, thereby ensuring that the ongoing power swap operation can be successfully completed.

In an embodiment, the control module 120 may be further configured to send a third control signal in response to that the first information indicates that the power swap station is in the on-grid state and the second information indicates a power supply requirement on a grid. The third control signal instructs to perform an on-grid discharging operation on the power swap station, to reversely supply power to the grid.

As an example, the power supply requirement on the grid may come from a dispatch instruction of a mains grid, and may occur when power supply of a local grid is insufficient.

In an embodiment, the control device 100 is powered by an uninterruptible power supply (Uninterruptible Power Supply, UPS) of a power swap station, such as a passive backup UPS power supply, an online interactive UPS power supply, or a double conversion UPS power supply. This is to ensure normal operation in the event of a sudden power failure at the power swap station.

For example, if the grid suddenly cuts off power to the power swap station during the power swap operation (in this case, the power swap station is in an off-grid state), the control device 100 powered by the uninterruptible power supply UPS may send a second control signal in response to the first information indicating that the power swap station is in the off grid state and the second information indicating that the power swap operation is in progress, to instruct to perform the off-grid discharging operation on the power swap station to supply power to the power swap station, so that the power swap station can complete the power swap requirement. In some other embodiments, even if the power swap station is in the on-grid state, the uninterruptible power supply UPS may continuously supply power to the control device of the power swap station, so that the power supply of the control device 100 is not affected by the grid at all, which further ensures continuity of the power swap process.

In an embodiment, the receiving module 110 may be further configured to receive third information. The third information indicates a progress of the power swap operation in the power swap station. Correspondingly, the control module 120 may be further configured to send a fourth control signal in response to the third information indicating that the power swap operation has been completed. The fourth control signal instructs to perform charging and discharging health check on a newly replaced battery pack. For a battery pack that passes a test, the charging operation may be performed, and for a battery pack that fails a test, the upper-level control device may be notified for further processing.

FIG. 2 is a structural block diagram of a power swap station 200 according to an embodiment of the disclosure. The power swap station 200 may include a charging and discharging apparatus 210 and a battery pack 220. The charging and discharging apparatus 210 may further include a control device 211, a power conversion device 212, a battery pack electrical plug 213, a direct current contactor 214, and an N-channel switch 215. The power conversion device 212 may be connected to the battery pack 220 through the direct current contactor 214 and the battery pack electrical plug 213. The power conversion device 212 may also be connected to an alternating current bus through the N-channel switch 215, and then connected to a station usage power interface 230 and a grid interface 240 of the power swap station 200.

The control device 211 may have the structure and function of the control device 100 as described above: generating a corresponding control signal (for example, the first control signal, the second control signal, the third control signal, or the fourth control signal) in response to received information (for example, the first information, the second information, or the third information).

The power conversion device 212 may be configured to convert alternating current power from the grid through the grid interface 240 to direct current power in response to receiving of the first control signal generated by the control device 211, to charge the battery pack 220 through the direct current contactor 214 and the battery pack electrical plug 213.

The power conversion device 212 may be further configured to convert direct current power from the battery pack 220 through the direct current contactor 214 and the battery pack electrical plug 213 to alternating current power in response to receiving of the second control signal generated by the control device 211, to supply power to the power swap operation of the power swap station through the station usage power interface 230, so as to maintain normal progress of the power swap operation.

In an embodiment, the power conversion device 212 is further configured to convert direct current power from the battery pack 220 through the direct current contactor 214 and the battery pack electrical plug 213 to alternating current power in response to receiving of the third control signal generated by the control device 211, to reversely supply power to the grid through the station usage power interface 230.

In an embodiment, the control device 211 and the power conversion device 212 communicate with each other through a controller area network (CAN), to exchange information between the control device 211 and the power conversion device 212, for example, the first control signal, the second control signal, or the third control signal generated by the control device 211 is transmitted to the power conversion device 212.

In an embodiment, the N-channel switch 215 is configured to be switched off in response to the first control signal or the third control signal, that is, when the charging and discharging apparatus 210 is in an on-grid state, the N-channel switch 215 is switched off. In addition, the N-channel switch 215 may be further configured to be switched on in response to the second control signal, that is, when the charging and discharging apparatus 210 is in an off-grid state, the N-channel switch 215 is switched on.

In an embodiment, the power conversion device 212 is a bidirectional AC/DC converter, so as to convert power at both ends of the power conversion device 212 between alternating current and direct current according to the control signal of the control device 211.

As shown in FIG. 2, the battery pack plug 213 may be connected to the control device 211 (for example, through a controller area network CAN), to exchange information between the battery pack plug and the control device. The direct current contactor 214 may also be connected to the control device 211 (for example, through a digital input/digital output DI/DO control interface), to send the control signal from the control device 211 to the direct current contactor 214.

For example, in response to the second control signal, the direct current power of the battery pack 220 needs to be converted to alternating current power by the power conversion device 212, so as to supply station usage power to the power swap station 200 through the station usage power interface 230. In this case, the control device 211 sends signals to the battery pack plug 213 and the direct current contactor 214 respectively to achieve the following objective: The battery pack 220 is first connected through the battery pack electrical plug 213, and then the power conversion device 212 is started, and when a voltage difference between the power conversion device 212 and the battery pack electrical plug 213 is less than a predetermined threshold (for example, 10 V), the direct current contactor 214 is connected. Therefore, through coordinated control over the power conversion device 212, the battery pack electrical plug 213, and the direct current contactor 214 by the control device 211, safety problems that may be caused by an excessively high voltage difference between two ends when the circuit is connected are avoided.

In the power swap station 200 of the embodiment shown in FIG. 2, only one charging and discharging apparatus 210 is shown. However, those skilled in the art can easily understand that the concept of the disclosure is not limited thereto, and the power swap station according to the disclosure may also include multiple charging and discharging apparatuses. In addition, the charging and discharging apparatus 210 of the embodiment shown in FIG. 2 is only connected to one battery pack 220, but those skilled in the art can easily understand that the concept of the disclosure is not limited thereto, and the charging and discharging apparatus 210 according to the disclosure may also be connected to multiple battery packs.

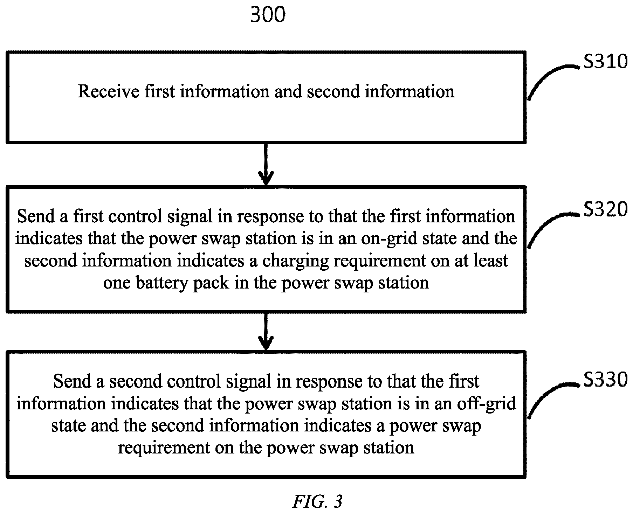

FIG. 3 is a flowchart of a control method 300 for a power swap station according to an embodiment of the disclosure. Specifically, the control method 300 includes the following steps.

Step S310: Receive first information and second information for indication. The first information indicates a status of the power swap station, and the second information indicates a working requirement on the power swap station.

Step S320: Send a first control signal in response to that the first information indicates that the power swap station is in an on-grid state and the second information indicates a charging requirement on at least one battery pack in the power swap station. The first control signal instructs to perform an on-grid charging operation on the power swap station, to charge the at least one battery pack. The second information indicating the charging requirement may come from, for example, an instruction of an upper-level control device, may come from a user input, or may come from that the power swap station recognizes that the station has a battery pack with unsaturated power. This is not limited in the disclosure.

In an embodiment, the on-grid charging operation may further include an idle phase, an insulation detection phase, a start phase, a charging phase, and an end phase.

In the idle phase of the on-grid charging operation, the battery pack electrical plug (for example, the battery pack electrical plug 213) is connected to the battery pack (for example, the battery pack 220) to supply low voltage (for example, 12V voltage) power to the battery pack, so that the battery pack is powered and the battery pack can be logically controlled by a control device (for example, the control device 211). The control device establishes communication with the battery pack through a controller area network CAN communication interface and the battery pack electrical plug. When the control device receives the first information indicating that the power swap station is in the on-grid state, the power conversion device (for example, the power conversion device 212) is set to a rectification mode. When the charging and discharging apparatus (for example, the charging and discharging apparatus 210) meets a preset start condition, the charging and discharging apparatus enters the insulation detection phase.

In the insulation detection phase of the on-grid charging operation, the insulation performance of the line is detected to ensure the safety of the subsequent charging process. After the insulation detection is passed, the power conversion device is stopped first, and then the start phase is entered.

In the start phase of the on-grid charging operation, the battery pack is first connected, that is, the control device controls an internal high-voltage relay of the battery pack to be switched on. Then, after the control device receives switch-on communication information of the high-voltage relay inside the battery, the output voltage and current of the power conversion device are set, and the power conversion device is started. When a voltage difference between the power conversion device voltage and the battery pack is less than a predetermined threshold (for example, 10 V), the control device controls, through the DO interface, the direct current contactor (for example, the direct current contactor 214) to be switched on. Then, when the control device receives, through the DI interface, information indicating that the state of the direct current contactor is switch-on, a control signal is sent to instruct the power conversion device to start current soft start. When the output current reaches a battery request current, the charging phase is entered.

In the charging phase of the on-grid charging operation, the control device adjusts the output of the power conversion device in real time according to the requested voltage and current of the battery pack until a preset charging end condition is met and the end phase is entered.

In the end phase of the on-grid charging operation, the power conversion device is instructed to stop to stop charging the battery. Then, when the output current of the power conversion device is less than a predetermined threshold (for example, 10 A), the direct current contactor is disconnected, the battery high-voltage contactor is disconnected, and the power conversion device is set to the rectification mode.

Step S330: Send a second control signal in response to that the first information indicates that the power swap station is in an off-grid state and the second information indicates a power swap requirement on the power swap station. The second control signal instructs to perform off grid discharging operation on the power swap station, to provide station usage power to the power swap station, so that the power swap station can complete the power swap requirement. The second information indicating the power swap requirement may come from, for example, an instruction of an upper-level control device, or may come from a user input. This is not limited in the disclosure.

In an embodiment, the off-grid discharging operation may further include an idle phase, a start phase, a discharging phase, and an end phase.

In the idle phase of the off-grid discharging operation, the entire charging and discharging apparatus (for example, the charging and discharging apparatus 210) is powered off, and the control device (for example, the control device 211) is powered by a backup power source (for example, an uninterruptible power supply UPS). The control device instructs the power conversion device (for example, the power conversion device 212) to be set to the inverter mode, and controls the battery high-voltage contactor and the direct current contactor (for example, the direct current contactor 214) to be switched on, so that power stored in the battery pack (for example, the battery pack 220) is supplied to the power conversion device. In this case, the charging and discharging apparatus waits for a predetermined time (for example, 30 seconds) to allow the power conversion device to be in a normal idle state. After the predetermined time has elapsed, when the control device detects that there is no fault in the battery pack and a branch circuit of the grid, the control device controls the charging and discharging apparatus to enter the start phase. Otherwise, if a fault is detected in the battery pack or the branch circuit of the grid, the control device controls the charging and discharging apparatus to enter the end phase.

In the start phase of the off-grid discharging operation, the control device sets the voltage and current of the power conversion device, and sends a start command. After the start succeeds, the control device receives a feedback that the power conversion device starts successfully, and controls the charging and discharging apparatus to enter the discharging phase.

In the discharging phase of the off-grid discharging operation, the control device starts to adjust the voltage and the current of the power conversion device, and sets a minimum discharging cut-off voltage (for example, 200 V) for the power conversion device, and an output current is set according to a maximum output current of the power conversion device. The power conversion device converts the direct current power stored in the battery pack to alternating current power, and supplies station usage power to the power swap station through an alternating current bus. When the charging and discharging apparatus meets a preset discharging end condition (for example, power of the battery is low), the end phase is entered.

In the end phase of the off-grid discharging operation, the control device sets the power conversion device to stop to stop the off-grid discharging operation on the battery. When the output current of the power conversion device is less than 10 A, the control device controls the direct current contactor to be switched off, and controls the high-voltage contactor of the battery to be switched off, and sets the power conversion device to a rectification mode.

Although not shown in FIG. 3, the control method 300 may further include: sending the second control signal in response to that the first information indicates that the power swap station is in the off-grid state and the second information indicates that the power swap station is performing a power swap operation. As mentioned above, the second control signal instructs to perform off-grid discharging operation on the power swap station, so that the power swap station can complete the power swap requirement. Therefore, if the power supply on the grid side is interrupted during the power swap process, the battery pack in the power swap station can still be used to provide station usage power, thereby ensuring that the ongoing power swap operation can be successfully completed.

Although not shown in FIG. 3, the control method 300 may further include: sending a third control signal in response to that the first information indicates that the power swap station is in an on-grid state, and the second information indicates a power supply requirement on the grid. The third control signal instructs to perform an on-grid discharging operation on the power swap station, to reversely supply power to the grid. As an example, the power supply requirement on the grid may come from a dispatch instruction of a mains grid, and may occur when power supply of a local grid is insufficient.

In an embodiment, the on-grid discharging operation may further include an idle phase, a start phase, a discharging phase, and an end phase.

In the idle phase of the on-grid discharging operation, the battery pack electrical plug (for example, the battery pack electrical plug 213) is connected to the battery pack (for example, the battery pack 220) to supply low voltage (for example, 12 V) power to the battery pack, so that the battery pack is powered and the battery pack can be logically controlled by a control device (for example, the control device 211). The control device establishes communication with the battery pack through a controller area network CAN communication interface and the battery pack electrical plug. When the control device receives the first information indicating that the power swap station is in the on-grid state, the power conversion device (for example, the power conversion device 212) is set to an inverter mode. When the charging and discharging apparatus (for example, the charging and discharging apparatus 210) meets a preset start condition, the charging and discharging apparatus enters a start phase.

In the start phase of the on-grid discharging operation, the control device first controls a high-voltage contactor of the battery pack to be switched on, and controls a direct current contactor (for example, the direct current contactor 214) to be switched on. Then, when the control device receives information indicating that the direct current contactor is switched on successfully, the voltage and the current of the power conversion device are set and a start command is sent. After the start succeeds, the control device enters the discharging phase after receiving a feedback that the power conversion device starts successfully.

In the discharging phase of the on-grid discharging operation, the charging and discharging apparatus is in discharge, the control device starts to adjust the voltage and the current of the power conversion device, and sets a minimum discharging cut-off voltage (for example, 200 V) for the power conversion device, and an output current is set according to a maximum output current of the power conversion device. The power conversion device feeds back energy stored in the battery pack to the grid according to the load output of the mains grid. Finally, when a preset discharge end condition is met, the end phase is entered.

In the end phase of the on-grid discharging operation, the power conversion device is set to stop to stop the discharging operation on the battery pack. When the output current of the power conversion device is less than a predetermined value (for example, 10 A), the control device controls the direct current contactor to be switched off, and controls the high-voltage contactor of the battery pack to be switched off, and sets the power conversion device to a rectification mode.

Although not shown in FIG. 3, the control method 300 may further include: receiving third information, and sending a fourth control signal in response to that the third information indicates that the power swap operation has been completed. The third information indicates the progress of the power swap operation in the power swap station, and the fourth control signal instructs to perform charging and discharging health check on the newly replaced battery pack. For a battery pack that passes a test, the charging operation may be performed, and for a battery pack that fails a test, the upper-level control device may be notified for further processing.

It should be understood that, some of the block diagrams shown in the accompanying drawings of the disclosure are functional entities and do not necessarily correspond to physically or logically independent entities. These functional entities may be implemented in the form of software, in one or more hardware modules or integrated circuits, or in different networks and/or processor apparatuses and/or micro-controller apparatuses.

It should also be understood that, in some alternative embodiments, the functions/steps included in the foregoing methods may not occur in the order shown in the flowchart. For example, two functions/steps shown in sequence may be executed substantially simultaneously or even in a reverse order. This specifically depends on the functions/steps involved.

In addition, those skilled in the art readily understand that the control method provided in the one or more embodiments of the disclosure can be implemented by using a computer program. The computer program is stored on a computer-readable storage medium. For example, when a computer storage medium storing the computer program is connected to a computer, the control method in one or more embodiments of the disclosure can be performed by running the computer program.

To sum up, according to the control solution for the power swap station of the disclosure, the power swap station can have both the on-grid charging and discharging function and the off-grid discharging function. The power swap station can convert the alternating current power provided by the grid to direct current power under a normal working condition, so as to charge the battery pack. In addition, the direct current power of the battery pack can be converted to alternating current power when the grid power supply is cut off, so as to supply station usage power to the power swap station, thereby ensuring the power supply for the power swap operation and enabling the power swap service to be completed smoothly.

In addition, when power supply of the grid is insufficient, the power swap station can also convert the direct current power in the battery pack to alternating current power, thereby reversely supplying power to the grid.

Although only some embodiments of the disclosure are described, it will be appreciated by those skilled in the art that the disclosure may be embodied in many other forms without departing from the essence and scope thereof. Accordingly, the presented examples and implementations are considered to be illustrative rather than restrictive, and the disclosure may encompass various modifications and replacements without departing from the spirit and scope of the disclosure that are defined by the appended claims.

## Claims

1. A control device for a power swap station, comprising:
a receiving module, configured to receive first information and second information for indication, wherein the first information indicates a status of the power swap station, and the second information indicates a working requirement on the power swap station; and
a control module, configured to:
send a first control signal in response to that the first information indicates that the power swap station is in an on-grid state and the second information indicates a charging requirement on at least one battery pack in the power swap station, wherein the first control signal instructs to perform an on-grid charging operation on the power swap station, to charge the at least one battery pack, and
send a second control signal in response to that the first information indicates that the power swap station is in an off-grid state and the second information indicates a power swap requirement on the power swap station, wherein the second control signal instructs to perform off-grid discharging operation on the power swap station, so that the power swap station can complete the power swap requirement.

2. A control device according to claim 1, wherein the control module is further configured to send the second control signal in response to that the first information indicates that the power swap station is in the off-grid state and the second information indicates that the power swap station is performing a power swap operation.

3. A control device according to claim 1 or 2, wherein
the control module is further configured to send a third control signal in response to that the first information indicates that the power swap station is in the on-grid state and the second information indicates a power supply requirement on a grid, wherein the third control signal instructs to perform an on-grid discharging operation on the power swap station, to reversely supply power to the grid.

4. A control device according to claim 1, 2, or 3, wherein the control device is powered by an uninterruptible power supply UPS.

5. A control device according to any one of claims 1 to 4, wherein
the receiving module is further configured to receive third information, wherein the third information indicates a progress of the power swap operation in the power swap station, and the control module is further configured to send a fourth control signal in response to that the third information indicates that the power swap operation has completed, wherein the fourth control signal instructs to perform charging and discharging health check on a newly replaced battery pack.

6. A charging and discharging apparatus for a power swap station, wherein the charging and discharging apparatus is connected to at least one battery pack, a grid, and station usage power of the power swap station, and the charging and discharging apparatus comprises:
the control device according to any one of claims 1 to 5; and
a power conversion device, configured to:
convert alternating current power from the grid to direct current power in response to receiving of the first control signal, to charge the at least one battery pack; and
convert direct current power from the at least one battery pack to alternating current power in response to receiving of the second control signal, to supply power to the power swap operation of the power swap station.

7. The charging and discharging apparatus according to claim 6, wherein the power conversion device is further configured to:
convert direct current power from the at least one battery pack to alternating current power in response to receiving of the third control signal, to reversely supply power to the grid.

8. The charging and discharging apparatus according to claim 7, further comprising:
an N-channel switch, configured to be switched off in response to the first control signal or the third control signal and be switched on in response to the second control signal.

9. The charging and discharging apparatus according to claim 6 or 7, wherein communication between the control device and the power conversion device is performed through a controller area network CAN.

10. A power swap station, comprising:
at least one charging and discharging apparatus according to any one of claims 6 to 9; and
at least one battery pack, wherein each of the at least one battery pack is connected to one of the at least one charging and discharging apparatus.

11. A control method for a power swap station, comprising:
receiving first information and second information for indication, wherein the first information indicates a status of the power swap station, and the second information indicates a working requirement on the power swap station;
send a first control signal in response to that the first information indicates that the power swap station is in an on-grid state and the second information indicates a charging requirement on at least one battery pack in the power swap station, wherein the first control signal instructs to perform an on-grid charging operation on the power swap station, to charge the at least one battery pack, and
send a second control signal in response to that the first information indicates that the power swap station is in an off-grid state and the second information indicates a power swap requirement on the power swap station, wherein the second control signal instructs to perform off-grid discharging operation on the power swap station, so that the power swap station can complete the power swap requirement.

12. The control method according to claim 11, further comprising:
sending the second control signal in response to that the first information indicates that the power swap station is in the off-grid state and the second information indicates that the power swap station is performing a power swap operation.

13. The control method according to claim 11 or 12, further comprising:
sending a third control signal in response to that the first information indicates that the power swap station is in the on-grid state and the second information indicates a power supply requirement on a grid, wherein the third control signal instructs to perform an on-grid discharging operation on the power swap station, to reversely supply power to the grid.

14. The control method according to claim 11, 12, or 13, further comprising:
receiving third information, wherein the third information indicates a progress of the power swap operation in the power swap station; and
sending a fourth control signal in response to that the third information indicates that the power swap operation has completed, wherein the fourth control signal instructs to perform charging and discharging health check on a newly replaced battery pack.

15. A computer-readable storage medium having a computer program stored thereon, wherein when the computer program is executed by a processor, the control method according to any one of claims 11 to 14 is implemented.
